# EUROPÄISCHE PATENTANMELDUNG

(11) **EP 1 060 782 A1**
(43) Veröffentlichungstag der Anmeldung: **20.12.2000**
(21) Anmeldenummer: 00111868.6
(22) Anmeldetag: 09.06.2000
(51) Int. Cl.: B01D 53/26, B60K 15/035

(54) **Vorrichtung und Verfahren zur Gastrocknung**

(30) Priorität: 17.06.1999 DE 19927595; 24.03.2000 DE 10014792
(71) Anmelder: DaimlerChrysler AG, 70567 Stuttgart (DE); EADS Airbus GmbH, 21129 Hamburg (DE)
(72) Erfinder: Kluwe, Torben, 27753 Delmenhorst (DE); Kock, Erich, 28211 Bremen (DE); Schmidt, Matthias, 06796 Brehna (DE)

(57) **Zusammenfassung**

Die Erfindung beinhaltet eine Vorrichtung und ein Verfahren zur Lufttrocknung in Belüftungseinrichtungen für Treibstofftanks und Gastrocknung in Treibstofftanks mittels Dämpfepermeationsmembranen und Sorbentien.

## Beschreibung

Die Erfindung bezieht sich auf eine Vorrichtung zur Gastrocknung in Belüftungseinrichtungen für Treibstofftanks nach dem Oberbegriff der Patentansprüche 1 und 9 und auf eine Vorrichtung zur Gastrocknung des Gasvolumens in Treibstofftanks nach dem Oberbegriff der Patentansprüche 2 und 10 sowie auf ein Verfahren zur Gastrocknung nach dem Oberbegriff der Patentansprüche 14, 15, 17 und 18.

Bei Treibstofftanks wird bei der Flüssigkeitsentnahme das Volumen des entnommenen Treibstoffs durch Gas ersetzt und üblicherweise durch Außenluft belüftet. Die einströmende Außenluft enthält immer einen Wasseranteil als Dampfkomponente, der je nach Sättigungsgrad bei Schwankungen der Umgebungstemperatur eine relative Luftfeuchte von 100% erreichen und kondensieren kann.

Besonders gravierend ist dieses Problem beispielsweise beim Betrieb von Flugzeugen, bei denen im Tankbereich eine Kondensation von Wasserdampf infolge enormer Temperaturschwankungen im Flugbetrieb auftritt. Der angereicherte Wasseranteil führt zur Verminderung des exergetischen Wirkungsgrades bei der Verbrennung des Flugzeugtreibstoffs (Kerosin) und zur Korrosion des Tankinnenraumes. Als Gegenmaßnahmen kommen für einen Korrosionsschutz unterschiedliche Beschichtungen des Tankinnenraumes in Betracht, welche allerdings fertigungstechnisch einen hohen Aufwand, insbesondere an Fügestellen zur Folge haben. Beim Einsatz von CFK-Werkstoffen kann die Feuchtewirkung sogar zu einer Verschlechterung der Werkstoffqualität führen.

Um prinzipiell das Problem der Wasserkontamination des Flugzeugtreibstoffs zu lösen, existieren Systeme, die das Wasser nach der Kondensation aus dem Tank abpumpen.

Bisher ist beispielsweise aus der Schrift EP 0 278 755 A2 ein derartiges System bekannt, welches das im Flugzeugtank in Taschen angereicherte Wasser über einen Pumpmechanismus dem Kraftstoffstrom beimengt. Dieses Wasser/Kraftstoffgemisch wird über eine Treibstoffpumpe den Triebwerken zugeführt und so der Wasseranteil über den Verbrennungsprozeß mit ausgeschieden. Diese Systeme sorgen lediglich dafür, das kondensierte Wassers gezielt aus dem Tank zu entnehmen und verhindern nicht die Wasseransammlung im gesamten Tankvolumen.

Ein sinnvoller Ansatz wäre einerseits, den Wasserdampfgehalt der eintretenden Luft durch eine geeignete Maßnahme insgesamt zu senken und, falls erforderlich, den im Tank befindlichen Gasanteil zusätzlich zu trocknen.

Im technischen Bereich ist bereits das Kälteverfahren oder die Überverdichtung von Gasen zur Lufttrocknung bekannt. Technisch bedingt sind diese Verfahren jedoch ausschließlich zum Trocknen von Gasen im stationären Bodenbetrieb realisiert.

Das Kälteverfahren und die Überverdichtung sind bereits technisch etablierte Technologien, die jedoch vor allem aus Gründen ihres hohen apparativen Aufwandes und der daraus resultierenden Gewichtsproblematik sicherlich nicht zur Problemlösung der Lufttrocknung in Flugzeugen beitragen können.

Das Kälteverfahren stellt dabei die älteste Trocknungstechnologie zur Lufttrocknung dar. Hierbei kühlt man die Druckluft mittels Kältemaschinen auf Werte unterhalb der Sättigungstemperatur ab. Je niedriger der Drucktaupunkt sein soll, um so mehr parallele Kühler sind dazu notwendig. Sollen beispielsweise Drucktaupunkte von weniger als 2°C erreicht werden, sind Parallelschaltungen von zwei Kühlem notwendig, da bei Temperaturen von weniger als 0°C die Kühlflächen vereisen können und nachfolgend abgetaut werden müssen. Für den kontinuierlichen Betrieb bedeutet dies eine periodische Betriebsweise der einzelnen Trockner. Die bei 2°C gesättigte Luft wird anschließend im Gegenstrom mit der eintretenden Luft erwärmt, so daß eine Sättigung von ca. 30% bei Umgebungstemperatur erreicht wird.

Das weitere, technisch bereits realisierte Verfahren, stellt die Überverdichtung dar, bei der die Luft Druckerhöhung verdichtet wird. Dabei steigt der Partialdruck des Wasserdampfes an, bis der Sättigungsdampfdruck erreicht wird und die Kondensation des Wasserdampfes einsetzt. Anschließend wird die Luft wieder auf Betriebstemperatur abgekühlt, wobei ein Teil des Wasserdampfes kondensiert. Eine Druckluftentspannung auf den Betriebsdruck bewirkt eine weitere Drucktaupunktabsenkung. Da die Kompression großer Gasvolumenströme sehr kostenintensiv ist, eignet sich die beschriebene Trocknungsmethode nur für kleine Volumenströme. Analog zum Trocknen mittels Kältemaschinen ist das notwendige technische Equipment sehr umfangreich, woraus ein Einsatz im Flugbetrieb wiederum vor allem aus Gewichtsgründen unmöglich erscheint.

Alle bisher bekannten Methoden zur Gastrocknung führen zu aufwendigen technischen Lösungen, die ein hohes Gewicht zur Folge haben. Besonders im Transportbereich und insbesondere in der Luft und Raumfahrt stehen damit bisher keine Lösungen zur Reduzierung des Wasseranteils in Treibstofftanks zur Verfügung.

Der Erfindung liegt demnach die Aufgabe zugrunde, eine Vorrichtung anzugeben, mit der die Kondensation von Wasserdampf in Treibstofftanks verhindert wird sowie ein damit im Zusammenhang stehendes Verfahren.

Die Erfindung wird in Bezug auf die Vorrichtung durch die Merkmale des Patentanspruchs 1, 2, 9 und 10 und in Bezug auf das Verfahren durch die Merkmale des Patentanspruchs 14, 15, 17 und 18 wiedergegeben. Die weiteren Ansprüche enthalten vorteilhafte Aus- und Weiterbildungen der Erfindung.

Die Erfindung beinhaltet eine Vorrichtung zur Lufttrocknung in Belüftungseinrichtungen für Treibstofftanks, bei der im Luftstrom der Belüftungseinrichtung Dämpfepermeationsmembranen derart angeordnet sind, daß die Luft nur über eine ausgewählte Oberfläche der Membran - hier als Vorderseite bezeichnet - strömt.

Ebenso kann diese Vorrichtung zur Gastrocknung des Gasvolumens in Treibstofftanks eingesetzt werden, wobei dann am Treibstofftank ein Entnahme- und Rückführungssystem zur Erzeugung eines Gasstroms und im Gasstrom Dämpfepermeationsmembranen angeordnet sind so, daß die Luft wiederum über die Membranvorderseite strömt.

Die Dämpfepermeationsmembranen sind als Kompositmembransysteme aufgebaut, bestehend aus einer Trägermembran zur mechanischen Stabilisierung und einer trennaktiven Schicht aus Polymeren, bevorzugt aus Celluloseether, Cellulosesulfaten oder Polyvinylalkoholen.

Auf der Rückseite der Dämpfepermeationsmembran ist gegebenenfalls eine weitere Beschichtung oder Schüttung von Sorbentien zur Speicherung des Wasseranteils angeordnet.

Die Dämpfepermeationsmembranen sind als Platten-, kompakte Hohlfaser oder Wickelmodule ausgebildet. Die erfindungsgemäße Vorrichtung eignet sich besonders für einen Einsatz in Treibstofftanks in der Luft- und Raumfahrt.

Eine weitere Vorrichtung zur Lufttrocknung in Belüftungseinrichtungen für Treibstofftanks ist ein im Luftstrom der Belüftungseinrichtung angeordnetes, durchströmbares Modul mit Sorbentien zur Abtrennung des Wasseranteils.

Ebenso kann diese Vorrichtung zur Gastrocknung des Gasvolumens in Treibstofftanks eingesetzt werden, wobei auch dann am Treibstofftank ein System zur Erzeugung eines Gasstroms angeordnet ist und sich im Gasstrom durchströmbare Module mit Sorbentien zur Abtrennung des Wasseranteils befinden.

Die Module sind als Kartuschen mit gasdurchlässiger Ummantelung und Sorbentienschüttung aufgebaut.

Die Sorbentien bestehen aus Adsorbentien, beispielsweise Silicagel, aktiviertes Aluminiumoxid, Zeolithe. Die Zeolithe weisen Porenweiten zwischen 5 und 15 Nanometern auf. Feinere Porenweiten bedingen einen zu hohen Druckverlust des Adsorbers und weisen zu wenig Vermögen zur Aufnahme von Wasser auf. In Zeolithe mit größeren Porenweiten dringen zu viele Kerosinbestandteile ein, was zur zumindest teilweisen Hydrophobierung führt. Als besonders geeignet hat sich eine Porenweite von circa 10 Nanometern erwiesen.

Die Sorbentien können auch aus festen Absorbentien bestehen, beispielsweise die sog. Superabsorbentien cellulosischer Verbindungen oder Lithiumchlorid, Calciumchlorid, Phosphorpentoxid oder aus flüssigen Absorbentien, beispielsweise Lithiumchloridlösungen, Schwefelsäure, Glykole.

Beim Verfahren zur Lufttrocknung in Belüftungseinrichtungen für Treibstofftanks mittels Dämpfepermeationsmembranen wird der Luftstrom der Belüftungseinrichtung über die Dämpfepermeationsmembranen geleitet, wobei der abzutrennende Wasseranteil durch die Membranen permeiert, im Permeat angereichert und gegebenenfalls gebunden wird und die getrocknete Luft im Retentat dem Tank zugeführt wird. Ebenso können anstatt Membranen auch vom Luftstrom durchströmte Kartuschen mit Sorbentienfüllung eingesetzt werden, an denen der abzutrennende Wasseranteil mittels Adsorption oder auch Absorption gebunden wird.

Beim Verfahren zur Gastrocknung in Treibstofftanks mittels Dämpfepermeationsmembranen werden dem Tank Gase entnommen und dieser Gasstrom über die Dämpfepermeationsmembranen geleitet. Der abzutrennende Wasseranteil permeiert durch die Membranen und wird im Permeat angereichert und gegebenenfalls gebunden. Das getrocknete Gas im Retentat wird dem Tank rückgeführt. Ebenso können anstatt Membranen wiederum vom Luftstrom durchströmte Kartuschen mit Sorbentien eingesetzt werden.

Ein besonderer Vorteil der Erfindung besteht in der Gewichtsreduktion gegenüber allen dem Stand der Technik entnehmbaren Lösungen. Damit stellen die Membrantrenn- und Sorptionsverfahren infolge ihres geringen apparativen Aufwandes eine ideale Problemlösung der Lufttrocknung besonders im Transportbereich und insbesondere in der Luft- und Raumfahrt dar. Abschätzungen ergaben, daß sich beispielsweise in Flugzeugtanks der Wasseranteil bis zu 1 Vol.% allein im Kerosin anreichern kann und so die Lufttrocknung mit dem Ziel der Verhinderung von Wasserdampfanreicherungen und -kondensationen im Tank ein maßgeblicher Faktor der Gewichtsreduzierung darstellt.

Im folgenden wird die Erfindung anhand von vorteilhaften Ausführungsbeispielen näher erläutert.

Bei den Sorptionsverfahren (Adsorption und Absorption) wird der in der Luft enthaltene Wasseranteil vom Sorbens unterschiedlich, in der Regel physisorptiv gebunden. Hierbei können je nach Sorptionsmittel Taupunkte von -30 bis - 100°C erreicht werden. Zu den gebräuchlichsten Adsorbentien gehören Silicagel (Si0₂), aktiviertes Aluminiumoxid (γ-Al₂0₃) und sog. Molekularsiebe (Zeolithe).

Neben der Adsorption kann eine Lufttrocknung auch mittels Absorption an festen oder flüssigen Absorbentien erfolgen. Hier verwendet man Lithiumchlorid (LiCl), Calciumchlorid (CaCl₂) und Phosphorpentoxid (P₄0₁₀). Zu den flüssigen Absorbentien gehören Lithiumchloridlösungen, Schwefelsäure (H₂SO₄) und Glykole.

Die Regenerierung im Betrieb der Absorptions- und Adsorptionstrockner erfolgt im Temperatur- oder Druckwechselverfahren. Ebenso kann ein Austausch der verbrauchten Materialien stattfinden. Es ist aus konstruktiven Vorgaben davon auszugehen, daß feste Absorbentien den flüssigen im Flugzeug vorzuziehen sind.

Eine Gruppe von neuen Adsorbentien stellen die sogenannten Superadsorbentien dar, die häufig auf der Basis cellulosischer Verbindungen wie hydrophile Celluloseether beruhen. Zur Gruppe der hydrophilen Celluloseether zählen Verbindungen wie Hydroxyethylcellulosen, Hydroxypropylcellulosen und Hydroxypropylmethylcellulosen sowie Polyacrylamid. Gerade die letztgenannten Verbindungen stellen infolge ihrer hohen Sorptionskapazität bei Schüttungen und Kompositmembranen eine besonders kostengünstige Variante dar, insbesondere bei Anwendungen in der Luft- und Raumfahrt. In der Realisierung handelt es sich um ein Modul, das direkt in die Belüftungsrohre der Flugzeugtanks integriert ist. Bevorzugt werden bei dieser Anwendung Adsorbentien in Pulverform eingesetzt.

Die Module können bedarfsweise erwärmt werden. Dies dient zur Regeneration der Adsorberschüttungen und um Vereisungen in diesen zu vermeiden. Hierzu sind Heißwasserleitungen denkbar oder Heizleitungen, die Zapfluft aus den Turbinen des Flugzeugs fuhren, oder elektrische Heizsysteme.

Vor dem Moduleingang ist eine Vorabscheidung realisiert. Diese dient zum Schutz des Moduls vor Schmutz und Staub, sie wird im einfachsten Fall mittels Filter oder Zyklon bewerkstelligt. Die Vorabscheidung kann mit dem Modul apparatetechnisch verknüpft werden. Es ist jedoch auch möglich, diese Vorabscheidungseinheit nicht in die Moduleinheit mit einzubeziehen. So ist es aus praktischen Gründen sinnvoll, an der Öffhung des Belüftungsrohrs zur Atmosphäre einen oder mehrere Filter zu installieren. Dabei werden über eine Rückspüleinnchtung am Filter, beispielsweise mittels Druckluft, die Ablagerungen auf dem Filter wieder entfernt. Eine solche Vorabscheidung ist insbesondere beim Starten und Landen vorteilhaft, da in diesen Betriebsphasen größere Staubmengen aufgewirbelt werden können.

Bei allen Ad- und Absorbentien werden beim erfindungsgemäßen Einsatz in Flugzeugen die Materialien bevorzugt in ein Modul als Schüttung integriert. Die im Flugbetrieb eindringende feuchte Außenluft strömt dann vor dem Eintritt in den Tankbereich durch die Sorbensschüttung. Hierbei wird der Wasserdampf sorptiv gebunden. Die Luft verläßt nahezu trocken das Modul und wird zum Tank weitergeleitet, wodurch eine nachfolgende Kondensation von Wasserdampf in den Flugzeugtanks ausgeschlossen ist. Nach gewisser Betriebszeit erfolgt entweder eine Regenerierung der Sorbentien durch Zufuhr thermischer Energie oder durch Druckwechseladsorption oder ein Ersatz in Form einer auswechselbaren Kartusche. Werden verschiedene Sorbentien eingesetzt, so werden diese räumlich voneinander getrennt. Dies dient der Verhinderung von konkurrierenden Sorptions- bzw. Desorptionsprozessen. Gleichzeitig erleichtert diese Sorbentientrennung eine Regeneration der Sorbentien.

Das Trennprinzip hochselektiver Dämpfepermeationsmembranen beruht auf den unterschiedlichen Löslichkeits- (Sorptionen) und Diffusionskoeffizienten der Feedkomponenten in der Membranmatrix. Daraus folgt, daß die eingesetzten Membranen dem Lösungs-Diffusionsmechanismus folgen müssen.

Aus technischen und wirtschaftlichen Gründen ist es immer sinnvoll, die schnell permeierende, in geringerer Konzentration vorliegende Komponente, aus dem Feed zu separieren. Das bedeutet, daß bei der erfindungsgemäßen Vorrichtung die Wasserdampfmoleküle durch die Membran permeieren und sich im Permeat anreichern. Die weiteren Luftkomponenten (N₂, 0₂ und C0₂) bilden das Retentat welches dem Tank zugeführt wird.

Zur technischen Realisierung bieten sich Kompositmembranen mit hydrophilen Trennschichten aus Polymeren wie Celluloseethern, Cellulosesulfaten oder Polyvinylalkoholen an. Kompositmembransysteme bestehen aus einer in der Regel asymmetrischen Trägermembran, die z.B. eine Polymer- oder Keramikmembran sein kann, welche der mechanischen Stabilisierung des Membransystems dient, und einer trennaktiven Schicht, die dem aufzubereitenden Feed zugekehrt ist.

Diese Trennschichtmatrix ist allein für den Stofftansport und für die Selektivität der Kompositmembran verantwortlich. Infolge des Mehrschichtaufbaus können bei geeigneter Wahl der asymmetrischen Trägermembran Kompositmembranen in Druckdifferenzen von mehreren 100 bar eingesetzt werden.

Im Gegensatz zur Sorption muß bei der Dämpfepermeation ein permeatseitiges zusätzliches Vakuum angelegt werden, woraus eine Partialdruckdifferenz - als Triebkraft des Prozesses - resultiert. Dieses Vakuum bildet die Basis für das Erreichen der gewünschten Wasserfreiheit der zu trocknenden Luft. Technisch kann dieses Vakuum z.B. durch eine einfache Vakuumpumpe oder durch einen Spülgasstrom realisiert werden. Vergleichend zur Sorption muß das abgetrennte Wasser bzw. der Wasserdampf weiterbehandelt werden. Das kondensierte Wasser kann an die Umgebung abgegeben oder in einem kleinen Tank gespeichert werden. Analog zur Sorption wird empfohlen, das Modul zu erwärmen, was die Verhinderung von Eisbildungen im Modul gewährleistet.

Vorteilhafterweise sind auch Membranen in Module integriert, wobei sich beispielsweise für den Flugbetrieb neben Platten- vor allem die kompakten Hohlfaser- und Wickelmodule, die sich durch eine hohe Kompaktheit auszeichnen, als günstig erwiesen haben.

Die Strömungsführung des Gases bzw. der Luft kann betriebsabhängig über unterschiedliche Wege erfolgen. In der Start- oder Landephase - also in Bodennähe - wird das Gas über das oder die Module geführt, egal ob Membran- oder Sorbens-Module. In größeren Höhen erfolgt die Strömungsführung über einen Bypass. Beide Wege können gesperrt oder freigeschaltet werden, beispielsweise über Absperrventile. Ist der Bypass gesperrt, so muß das Gas durch das Modul strömen. Ist der Modulweg gesperrt, so muß das Gas durch den Bypass strömen.

Die (beidseitige) Absperrung des Modul-Weges in großen Höhen verhindert einerseits die Desorption des Wassers infolge des Druckabfalls und dessen Eindringen in den Tank sowie andererseits das Eindringen von infolge des Druckabfalls verdampften Kerosin aus dem Tank in das Modul, was zu Hydrophobierung der Sorbentien führen würde. Außerdem gewährleistet der Bypass die Einhaltung hoher Sicherheitsanforderungen des Luftverkehrs (Verstopfungsgefahr des Adsorbers).

Die Absperrung des Bypass in Bodennähe gewährleistet die Zwangsführung des Gases durch das Modul und damit dessen Trocknung. Dies ist in großen Höhen mit entsprechend niedrigen Temperaturen aufgrund des dort vorliegenden minimalen Wasserdampfgehaltes der Luft nicht nötig.

Die Module - gleich welcher Art - sind mit einem Schnellverschlußsystem in die Strömungsführung des Gases bzw. der Luft integriert. Dieses Schnellverschlußsystem ermöglicht eine einfaches und schnelles Auswechseln.

Nach erfolgter Abtrennung des Wasserdampfes muß eine Speicherung und/oder Kondensation des Wassers erfolgen. Hier finden eine Reihe von hydrophilen Celluloseethern Anwendung, die zur thermischen Aggregation neigen. Bei den erwähnten Celluloseethern existieren eine Reihe von Verbindungen, vor allem die Hydroxypropylcellulosen, die sich durch ein inverses Lösungs- und damit Sorptions- bzw. Diffusionsverhalten gegenüber Wassermolekülen mit wachsender Prozeßtemperatur auszeichnen. Bei diesen Polymeren findet man mit zunehmender Prozeßtemperatur eine Verringerung der Löslichkeiten und eine Abnahme des Sorptions- und Diffusionsvermögens der Wassermoleküle in der Polymermatrix. So erfolgt ab einer bestimmten Temperatur eine nahezu schlagartige Freisetzung der sorptiv gebundenen Wassermoleküle. Übliche Temperaturen sind zwischen 30 und 70° C zu finden. Somit ist es möglich, mittels Temperaturzuführ eine Wasserabtrennung aus der Celluloseethermatrix zu initiieren. Das abgetrennte Wasser kann man am Boden des Moduls sammeln und bei Bedarf ablassen. Die Heizung kann mittels einem der vorstehend bezüglich der Sorbentienmodule beschriebenen Systeme erfolgen.

Die Entfernung des kondensierten Wassers aus der Polymermatrix geschieht neben dem beschriebenen Fall einer Membran mit spezifischer trennaktiver Celluloseetherschicht auch für Celluloseetherschüttungen mit den bereits oben genannten Ad- bzw. Absorbentien.

Praktische Versuche zur Lufttrocknung von feuchtegesättigter Luft, die mittels Dämpfepermeationsmembranen und der Superadsorbentien Hydroxyethyl- und Hydroxypropylcellulose durchgeführt wurden, ergaben eine Selektivität zwischen Wasserdampf und Luft von 10000. Dies bedeutet, daß die Wassermoleküle zumindest 10000 mal schneller durch die Membran bzw. Adsorber permeieren als Luft.

## Patentansprüche

1. Vorrichtung zur Lufttrocknung in Belüftungseinrichtungen für Treibstofftanks, dadurch gekennzeichnet,
- daß im Luftstrom der Belüftungseinrichtung Dämpfepermeationsmembranen mit Vorder und Rückseite derart angeordnet sind, daß die Luft nur über die Vorderseite der Membran strömt.

2. Vorrichtung zur Gastrocknung des Gasvolumens in Treibstofftanks, dadurch gekennzeichnet,
- daß am Treibstofftank ein Entnahme- und Rückführungssystem zur Erzeugung eines Gasstroms angeordnet ist und
- daß im Gasstrom Dämpfepermeationsmembranen mit Vorder und Rückseite derart angeordnet sind, daß die Luft über die Membranvorderseite strömt.

3. Vorrichtung nach Anspruch 1 oder 2, dadurch gekennzeichnet, daß die Dämpfepermeationsmembranen als Kompositmembransysteme aufgebaut sind, bestehend aus einer Trägermembran zur mechanischen Stabilisierung und einer trennaktiven Schicht aus Polymeren.

4. Vorrichtung nach Anspruch 3, dadurch gekennzeichnet, daß die trennaktive Schicht aus Polymeren und Superadsorbentien, bevorzugt aus Celluloseether, Cellulosesulfaten oder Polyvinylalkoholen besteht.

5. Vorrichtung nach Anspruch 3, dadurch gekennzeichnet, daß auf der Rückseite der Dämpfepermeationsmembran eine weitere Beschichtung oder Schüttung von Sorbentien zur Speicherung des Wasseranteils angeordnet ist.

6. Vorrichtung nach Anspruch einem der Ansprüche 1 bis 5, dadurch gekennzeichnet, daß die Dämpfepermeationsmembranen als Platten-, kompakte Hohlfaser oder Wickelmodule ausgebildet sind.

7. Vorrichtung nach Anspruch 1, dadurch gekennzeichnet, daß dieser ein Filter oder Zyklone vorgeschaltet ist.

8. Vorrichtung nach einem der Ansprüche 1 bis 7, dadurch gekennzeichnet, daß sie in Flugzeugen eingebaut ist.

9. Vorrichtung zur Lufttrocknung in Belüftungseinrichtungen für Treibstofftanks, dadurch gekennzeichnet,
- daß im Luftstrom der Belüftungseinrichtung durchströmbare Module mit Sorbentien zur Abtrennung des Wasseranteils angeordnet sind.

10. Vorrichtung zur Gastrocknung des Gasvolumens in Treibstofftanks, dadurch gekennzeichnet,
- daß am Treibstofftank ein System zur Erzeugung eines Gasstroms angeordnet ist und
- daß im Gasstrom durchströmbare Module mit Sorbentien zur Abtrennung des Wasseranteils angeordnet sind.

11. Vorrichtung nach Anspruch 9 oder 10, dadurch gekennzeichnet, daß die Module als Kartuschen mit gasdurchlässiger Ummantelung und Sorbentienschüttung ausgebildet sind.

12. Vorrichtung nach einem der Ansprüche 9 bis 11, dadurch gekennzeichnet, daß die Sorbentien aus Adsorbentien wie beispielsweise Silicagel, aktiviertes Aluminiumoxid, Zeolithe bestehen.

13. Vorrichtung nach einem der Ansprüche 9 bis 11, dadurch gekennzeichnet, daß die Sorbentien aus festen Absorbentien bestehen, wie beispielsweise Superabsorbentien insbesondere cellulosischer Verbindungen oder Lithiumchlorid, Calciumchlorid, Phosphorpentoxid oder aus flüssigen Absorbentien bestehen, wie beispielsweise Lithiumchloridlösungen, Schwefelsäure, Glykole.

14. Verfahren zur Lufttrocknung in Belüftungseinrichtungen für Treibstofftanks mittels Dämpfepermeationsmembranen, dadurch gekennzeichnet,
- daß der Luftstrom der Belüftungseinrichtung über die Dämpfepermeations membranen geleitet wird, wobei der abzutrennende Wasseranteil durch die Membranen permeiert und im Permeat angereichert wird und
- daß die getrocknete Luft im Retentat dem Tank zugeführt wird.

15. Verfahren zur Gastrocknung in Treibstofftanks mittels Dämpfepermeationsmembranen, dadurch gekennezeichnet,
- daß dem Tank Gase entnommen werden,
- daß dieser Gasstrom über die Dämpfepermeationsmembranen geleitet wird, wobei der abzutrennende Wasseranteil durch die Membranen permeiert, im Permeat angereichert wird und
- daß das Gas im Retentat dem Tank rückgeführt wird.

16. Verfahren zur Luft- oder Gastrocknung in Treibstofftanks mittels Dämpfepermeationsmembranen nach Anspruch 14 oder 15, dadurch gekennzeichnet, daß der Permeationsfluß durch die Membran mittels einer Vakuumeinrichtung unterstützt wird.

17. Verfahren zur Lufttrocknung in Belüftungseinrichtungen für Treibstofftanks mittels Sorbentien, dadurch gekennzeichnet,
- daß der Luftstrom der Belüftungseinrichtung über die Sorbentien geleitet wird, wobei der abzutrennende Wasseranteil gebunden wird und
- daß die getrocknete Luft im Retentat dem Tank zugeführt wird.

18. Verfahren zur Gastrocknung in Treibstofftanks mittels Sorbentien, dadurch gekennzeichnet,
- daß dem Tank Gase entnommen werden,
- daß dieser Gasstrom über die Sorbentien geleitet wird, wobei der abzutrennende Wasseranteil gebunden wird und
- daß das Gas im Retentat dem Tank zugeführt wird.
